# EUROPÄISCHE PATENTSCHRIFT

(11) **EP 3 158 615 B1**
(45) Veröffentlichungstag und Bekanntmachung des Hinweises auf die Patenterteilung: **11.04.2018**
(21) Anmeldenummer: 15729166.7
(22) Anmeldetag: 15.06.2015
(51) Int. Cl.: H02G 3/22, H02G 15/013, H02G 3/08

(54) **BAUTEIL MIT ZUMINDEST EINER ÖFFNUNG**
COMPONENT WITH AT LEAST ONE OPENING
COMPOSANT COMPORTANT AU MOINS UNE OUVERTURE

(30) Priorität: 17.06.2014 DE 102014211593
(43) Veröffentlichungstag der Anmeldung: 26.04.2017
(73) Patentinhaber: Conti Temic microelectronic GmbH, 90411 Nürnberg (DE); Edegs Formenbau GmbH, 71691 Freiberg/Neckar (DE)
(72) Erfinder: BUHL, Joachim, 90482 Nürnberg (DE); MENKE, Jens, 90584 Allersberg (DE); SCHARRER, Klaus, 91224 Hohenstadt-Pommelsbrunn (DE); WIECZOREK, Matthias, 91233 Neunkirchen am Sand (DE); ZENICHOWSKI, Jan, 91244 Pommelsbrunn (DE); BRADIC, Robert, 71065 Sindelfingen (DE); RAPP, Gerhard, 71691 Freiberg/Neckar (DE)
(74) Vertreter: Bonn, Roman Klemens
(86) Internationale Anmeldenummer: PCT/EP2015/063346
(87) Internationale Veröffentlichungsnummer: WO 2015/193245

(56) Entgegenhaltungen:
- WO-A1-2004/084358
- CN-Y- 201 303 240
- DE-A1- 3 412 786
- DE-A1-102004 018 488
- GB-A- 2 341 012

## Beschreibung

Die Erfindung betrifft ein Bauteil mit zumindest einer Öffnung, durch welche ein elektrisches und/oder elektronisches Kontaktelement gegenüber einem Eindringen von Umweltmedien abgedichtet herausgeführt ist.
Die CN 201 303 240 Y offenbart eine ausdehnbare Mehrkabel-Brandschutz-Durchführungsvorrichtung, die einen Kabelrahmen mit mindestens einem Durchführungskabel umfasst. Der verbleibende Raum im Kabelrahmen ist mit hohlen Gummihülsen unterschiedlicher Spezifikationen gefüllt und die beiden Enden des Rahmens sind durch polymeres Material versiegelt.
Aus der DE 10 2004 018 488 A1 ist eine gas- und flüssigkeitsdichte elektrische Durchführung mindestens eines Leiters durch eine Wand eines Kunststoffgehäuses bekannt. Das Kunststoffgehäuse ist mindestens im Bereich des Leiters doppelwandig, bestehend aus einer Innen- und einer Außenwand, ausgebildet. Zwischen der Innenwand und der Außenwand ist ein dauerelastisches Material angeordnet, das den Leiter zwischen der Innenwand und der Außenwand vollständig umgibt. Der Leiter ist durch Einspritzen des Leiters in das Kunststoffgehäuse fest zwischen der Innenwand und der Außenwand brückenartig eingespannt. Ausgehend von diesem gattungsgemässen Stand der Technik liegt der Erfindung die Aufgabe zugrunde, ein gegenüber dem Stand der Technik verbessertes Bauteil mit zumindest einer Öffnung, durch welche ein elektrisches und/oder elektronisches Kontaktelement gegenüber einem Eindringen von Umweltmedien abgedichtet herausgeführt ist, anzugeben. Die Aufgabe wird erfindungsgemäß durch die in Anspruch 1 angegebenen kennzeichnenden Merkmale gelöst.

Vorteilhafte Ausgestaltungen der Erfindung sind Gegenstand der Unteransprüche.

Ein Bauteil umfasst zumindest eine Öffnung, durch welche ein elektrisches und/oder elektronisches Kontaktelement gegenüber einem Eindringen von Umweltmedien abgedichtet herausgeführt ist. Erfindungsgemäß ist zumindest in einer Wandung des Bauteiles im Bereich des Kontaktelementes ein abgeschlossenes Volumen ausgebildet, in welches ein dauerelastisches Dichtmaterial, welches das Kontaktelement zumindest abschnittsweise vollständig umgibt, eingefüllt ist.

Mittels des dauerelastischen Dichtmaterials ist das Bauteil Medium dicht ausgeführt, so dass das Risiko eines Eindringens, beispielsweise von Feuchtigkeit, ins Innere des Bauteiles zumindest vermindert ist und somit im Inneren angeordnete Komponenten weitestgehend vor Umweltmedien geschützt sind. Dadurch, dass das Dichtmaterial dauerelastisch ist, ist das Volumen optimiert mit dem Dichtmaterial ausfüllbar, so dass das Bauteil abgedichtet und zumindest eine Lebensdauer der Komponenten im Inneren des Bauteiles erhöht ist.

In einer möglichen Ausführungsform umfasst das Bauteil ein Deckelelement mit zumindest einer Öffnung, durch welche das zumindest eine Kontaktelement hindurchgeführt ist, wobei das Volumen zumindest einseitig mittels des Deckelelementes begrenzt ist. Das Deckelelement ist vorzugsweise zerstörungsfrei an dem Bauteil befestigt, so dass beispielsweise ein defektes Kontaktelement vergleichsweise einfach austauschbar ist.

In einer Weiterbildung des Bauteiles umfasst das Deckelelement zumindest eine Dichtkante zum Verhindern eines Auslaufens des eingefüllten Dichtmaterials aus dem abgeschlossenen Volumen. Insbesondere ist mittels der zumindest einen Dichtkante ein Auslaufen des Dichtmaterials während eines Einfüllens in das Volumen des Bauteiles weitestgehend verhindert.

In einer weiteren möglichen Ausführungsform ist die zumindest eine Dichtkante an das Deckelelement angespritzt, so dass das Deckelelement und die zumindest eine Dichtkante einteilig ausgebildet sind. Die zumindest eine Dichtkante, beispielsweise in Form einer Dichtlippe, ist also nicht als ein separates Teil ausgebildet, so dass eine Teileanzahl des Bauteiles verringert ist.

Eine Ausbildung des Bauteiles sieht vor, dass das Deckelelement zumindest einen mit dem Volumen strömungstechnisch verbundenen Überlaufkanal umfasst. Mittels des Überlaufkanals kann ein Überschuss des in das Volumen eingefüllten Dichtmaterials, insbesondere aufgrund eines temperaturbedingten Expandierens, kompensiert werden, ohne dass das Bauteil und/oder der Deckel beschädigt werden bzw. wird.

In einer weiteren Ausbildung umfasst das Deckelelement zumindest eine Einfüllöffnung zum Einfüllen des Dichtmaterials in das Volumen, so dass das Volumen mittels des Deckelelementes vor Einfüllen des Dichtmaterials verschließbar ist.

Eine weitere mögliche Ausbildung sieht vor, dass das Deckelelement und/oder die Wandung Leitelemente zur Vorgabe einer Fließrichtung des Dichtmaterials beim Einfüllen desselben in das Volumen umfassen bzw. umfasst. Mittels der Leitelemente wird erreicht, dass das Dichtmaterial in Form eines turbulenzfreien Stromes in das Volumen einfüllbar ist, wobei die Bildung von Lufteinschlüsse weitestgehend ausgeschlossen ist.

In einer möglichen Ausführungsform umfasst das dauerelastische Dichtmaterial Silikon, Flüssigsilikonkautschuk und/oder Epoxidharze. Das Dichtmaterial ist dauerelastisch und füllt das Volumen weitestgehend vollständig aus, so dass das zumindest eine Kontaktelement von dem Dichtmaterial zumindest abschnittsweise vollständig umgeben ist.

Zudem ist durch die Wahl des Dichtmaterials eine Abdichtung im Bereich der Öffnung zur Hindurchführung des zumindest einen Kontaktelementes realisierbar, welche eine verhältnismäßig hohe Temperaturbeständigkeit aufweist, so dass das Bauteil sowohl in einer Umgebung mit vergleichsweise hohen als auch niedrigen vorherrschenden Temperaturen verwendet werden kann.

In einer möglichen Weiterbildung des Bauteiles ist dieses aus Kunststoff gebildet und das zumindest eine Kontaktelement umfasst ein Stanzgitter, ein Draht und/oder eine Litze. Da das Bauteil aus Kunststoff gebildet ist, kann es in einem Spritzgussverfahren hergestellt werden, so dass das Bauteil weitestgehend automatisiert in vergleichsweise kurzen Zykluszeiten herstellbar ist.

Ausführungsbeispiele der Erfindung werden im Folgenden anhand von Zeichnungen näher erläutert.

Darin zeigen:
- Figur 1: schematisch eine erste Schnittdarstellung eines Ausschnittes eines Bauteiles in einer ersten Ausführungsform mit einem Deckelelement und Kontaktelementen,
- Figur 2: schematisch eine zweite Schnittdarstellung eines weiteren Ausschnittes des Bauteiles in der ersten Ausführungsform mit Deckelelement und Kontaktelementen,
- Figur 3: schematisch eine erste Seitenansicht des Deckelelementes,
- Figur 4: schematisch eine zweite Seitenansicht des Deckelelementes,
- Figur 5: schematisch eine Draufsicht des Deckelelementes,
- Figur 6: schematisch eine perspektivische Ansicht des Deckelelementes,
- Figur 7: schematisch eine erste Schnittdarstellung des Deckelelementes,
- Figur 8: schematisch eine zweite Schnittdarstellung des Deckelelementes,
- Figur 9: schematisch eine Schnittdarstellung eines Ausschnittes eines Bauteiles in einer zweiten Ausführungsform mit einem Deckelelement und Kontaktelementen,
- Figur 10: schematisch eine perspektivische Ansicht eines Deckelelementes,
- Figur 11: schematisch eine perspektivische Ansicht des Deckelelementes mit hindurchgeführten Kontaktelementen,
- Figur 12: schematisch eine perspektivische Ansicht des Deckelelementes mit den Kontaktelementen und einem Verdrehschutz oder einem Betätigungselement,
- Figur 13: schematisch eine perspektivische Ansicht des teilweise zusammengesetzten Bauteiles in der zweiten Ausführungsform, und
- Figur 14: schematisch eine perspektivische Ansicht des Bauteiles in der zweiten Ausführungsform im zusammengesetzten Zustand.

Einander entsprechende Teile sind in allen Figuren mit den gleichen Bezugszeichen versehen.

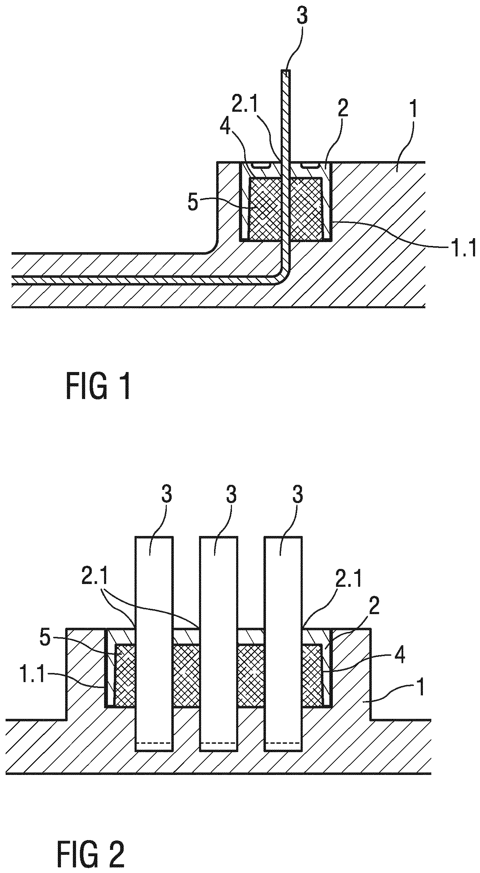

**Figur 1** zeigt eine erste Schnittdarstellung eines Ausschnittes eines Bauteiles 1 in einer ersten Ausführungsform mit einem Deckelelement 2 und drei in Figur 2 näher dargestellten elektrischen und/oder elektronischen Kontaktelementen 3.

Bei dem Bauteil 1 handelt es sich um einen sogenannten Steckverbinder eines Motoranschlusses, wobei das Bauteil 1 im Wesentlichen aus Kunststoff gebildet ist.

Die Kontaktelemente 3 sind aus Kupfer gebildet und durch das Bauteil 1 und Öffnungen 2.1 des Deckelelementes 2 hindurchgeführt, wobei die Gefahr besteht, dass Umweltmedien, wie beispielsweise Feuchtigkeit, über die Öffnungen 2.1, d. h. über den Durchführbereich, in das Bauteil 1 eintreten. Dadurch können Erosionen, insbesondere am innenliegenden Abschnitt der Kontaktelemente 3 auftreten, so dass eine Lebensdauer des Bauteiles 1, insbesondere der Kontaktelemente 3 wesentlich verringert sein kann.

Um das Risiko eines Eindringens von Umweltmedien in das Bauteil 1 zumindest zu verringern, umfasst das Bauteil 1 ein mittels des Deckelelementes 2 weitestgehend abgeschlossenes Volumen 4 in Form einer Kammer, in welches ein dauerelastisches Dichtmaterial 5 eingefüllt ist. Dabei umgibt das dauerelastische Dichtmaterial 5, beispielsweise Silikon, Flüssigsilikonkautschuk und/oder Epoxidharze, die Kontaktelemente 3 im Abschnitt des Volumens 4 vollständig.

Die Kontaktelemente 3 sind durch das Bauteil 1 und die Öffnungen 2.1 des Deckelelementes 2 hindurchgeführt, wobei die Kontaktelemente 3 mit ihrem freiliegenden Ende aus dem Bauteil 1 heraus- und senkrecht von dem Deckelelement 2 abragen.

Das Deckelelement 2 ist im Wesentlichen kastenförmig ausgebildet und weist eine offene Seite auf, wobei seine Form mit einer das Volumen 4 bildenden Aussparung 1.1 des Bauteiles 1 korrespondiert. Das Deckelelement 2 ist formschlüssig in die Aussparung 1.1 einsteckbar und somit in dieser gehalten, wobei die offene Seite in Richtung des Bauteiles 1 angeordnet ist.

Denkbar ist auch, dass das Deckelelement 2 zusätzlich stoff- und/oder kraftschlüssig an dem Bauteil 1, insbesondere in der Aussparung 1.1 angeordnet ist.

Das Deckelelement 2 dient einem Vorabdichten des Volumens 4 zu dem Bauteil 1 und den Kontaktelementen 3.

Mittels des Bauteiles 1 und dem Deckelelement 2 ist das abgeschlossene Volumen 4 gebildet, dass mit dem Dichtmaterial 5 befüllt ist und die Kontaktelemente 3 im Bereich des Volumens 4 umgibt.

In **Figur 2** ist eine zweite Schnittdarstellung eines Ausschnittes des Bauteiles 1 dargestellt.

Im Detail zeigt **Figur 2** die drei durch das Bauteil 1, das Volumen 4 mit dem Dichtmaterial 5, und die Öffnungen 2.1 des Deckelelementes 2 nebeneinander hindurchgeführten Kontaktelemente 3.

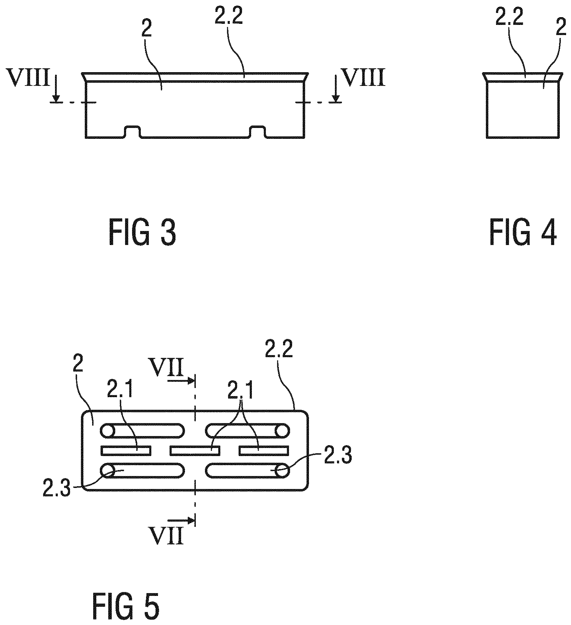

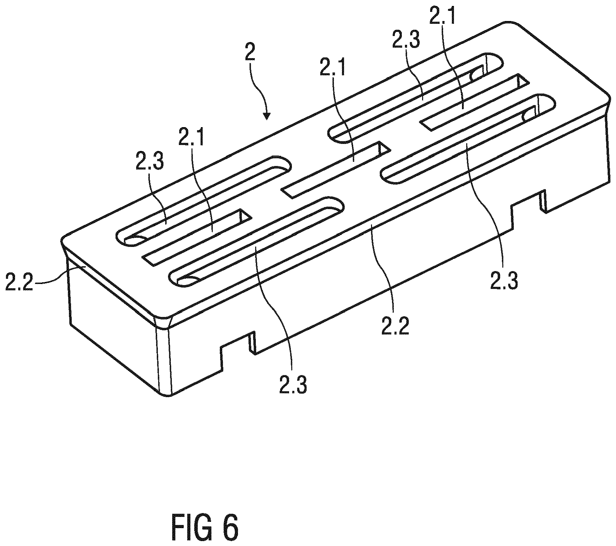

Die **Figuren 3 bis 6** zeigen jeweils eine Ansicht des Deckelelementes 2, wobei in **Figur 3** eine erste Seitenansicht, in **Figur 4** eine zweite Seitenansicht, in **Figur 5** eine Draufsicht und in **Figur 6** eine perspektivische Ansicht dargestellt ist.

An einem der offenen Seite des Deckelelementes 2 gegenüberliegenden Bereich, welcher im eingesteckten Zustand im Wesentlichen flächenbündig mit dem Bauteil 1 abschließt, ist eine Dichtkante 2.2 ausgeformt.

Mittels der Dichtkante 2.2 wird ein Auslaufen des Dichtmaterials 5 nach einem Einfüllen in das Volumen 4 verhindert.

Wie oben beschrieben, zeigt **Figur 5** eine Draufsicht des Deckelelementes 2. Zusätzlich zu den Öffnungen 2.1 sind Überlaufkanäle 2.3 in eine Oberseite des Deckelelementes 2 eingebracht, so dass ein Überschuss des Dichtmaterials 5, beispielsweise bei Expansion des Dichtmaterials 5 über die strömungstechnisch mit dem Volumen 4 verbundenen Überlaufkanäle 2.3 nach außen treten kann.

Das mittels der Aussparung 1.1 in dem Bauteil 1 und dem Deckelelement 2 im Wesentlichen abgeschlossene Volumen 4 ist über ein Durchgangsloch im Deckelelement 2, beispielsweise einen Überlaufkanal 2.3 und/oder eine nicht näher dargestellte Einfüllöffnung, befüllbar.

Zudem kann das Volumen 4 über zumindest eine Entlüftungsöffnung, bei welcher es sich um die Einfüllöffnung und/oder zumindest einen Überlaufkanal 2.3 handelt, entlüftet werden.

Alternativ oder zusätzlich ist das Volumen 4 auch über eine in das Bauteil 1 eingebrachte Einfüllöffnung befüllbar.

Das Dichtmaterial 5 kann mittels Hineindrücken und/oder mittels eines in dem Volumen 4 erzeugten Unterdruckes in das Volumen 4 eingebracht werden, wobei das Befüllen, insbesondere das Hineindrücken in das Volumen 4, mittels einer Spritzmaschine und/oder einer anderen Dosiervorrichtung durchgeführt werden kann.

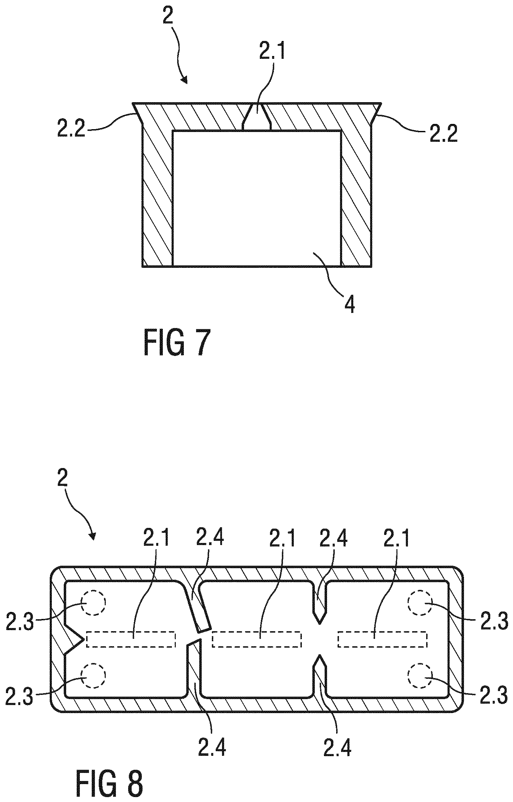

In **Figur 7** ist eine erste Schnittdarstellung und in **Figur 8** ist eine zweite Schnittdarstellung des Deckelelementes 2 dargestellt.

In **Figur 8** ist gezeigt, dass an Seitenwandungen des Deckelelementes 2 Leitelemente 2.4 zur Vorgabe einer Fließrichtung beim Einfüllen des Dichtmaterials 5 angeformt, bevorzugt ausgeformt sind.

Alternativ können, sofern das Bauteil 1 selbst das abgeschlossene Volumen 4 bildet, die Leitelemente 2.4 an den Wandungen des das Volumen 4 begrenzenden Bauteiles 1 angeformt oder ausgeformt sein.

Mittels der Leitelemente 2.4 kann im Wesentlichen sichergestellt werden, dass das Dichtmaterial 5 ohne Turbulenzen in das Volumen 4 einfüllbar ist und das Risiko von Lufteinschlüssen zumindest verringert wird.

Bei der Herstellung des Bauteiles 1 und einer vorgesehenen Verwendung des Deckelelementes 2 kann vorgesehen sein, dass dieser in einem automatisierten Serienprozess in die Aussparung 1.1 des Bauteiles 1 eingesteckt oder aufgesetzt wird. Wie oben beschrieben, kann das Volumen 4, insbesondere in dem automatisierten Serienprozess, mittels einer Spritzmaschine und/oder einer anderen Dosiervorrichtung befüllt werden.

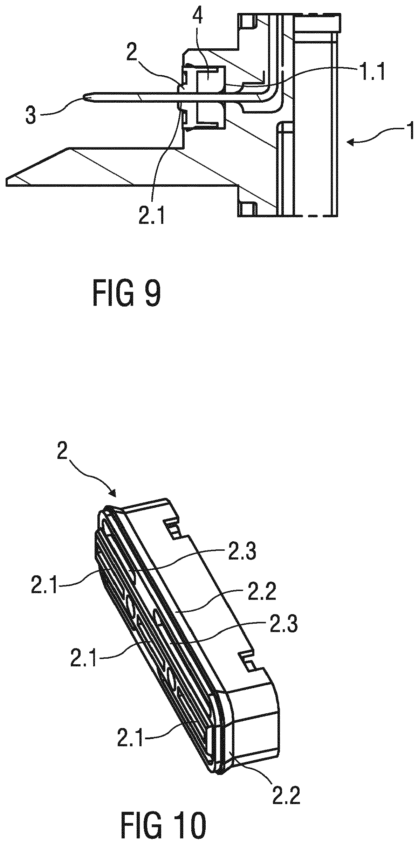

In **Figur 9** ist eine Schnittdarstellung eines Bauteiles 1 in einer zweiten Ausführungsform dargestellt.

Auch hier sind drei Kontaktelemente 3 vorgesehen, die durch die das Volumen 4 bildende Aussparung 1.1 des Bauteiles 1 und durch die Öffnungen 2.1 des Deckelelementes 2 geführt sind.

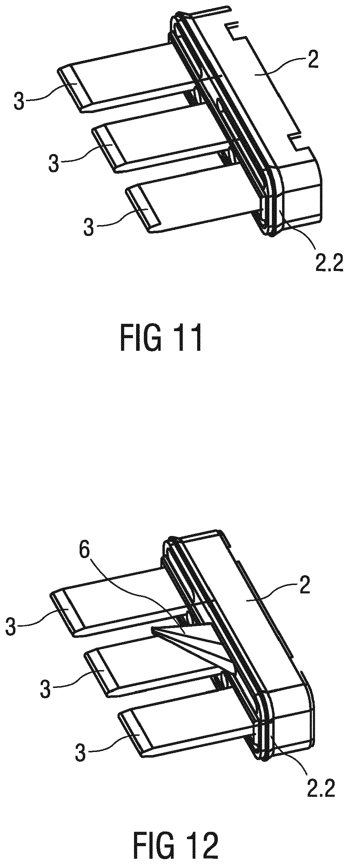

**Figur 10** zeigt eine perspektivische Ansicht des Deckelelementes 2 und **Figur 11** eine perspektivische Ansicht des Deckelelementes 2 mit den durch die Öffnungen 2.1 geführten Kontaktelementen 3.

In **Figur 12** sind das Deckelelement 2 mit den Kontaktelementen 3 und einem Verdrehschutz, einer Einführhilfe und/oder einem anderen Betätigungselement 6 dargestellt.

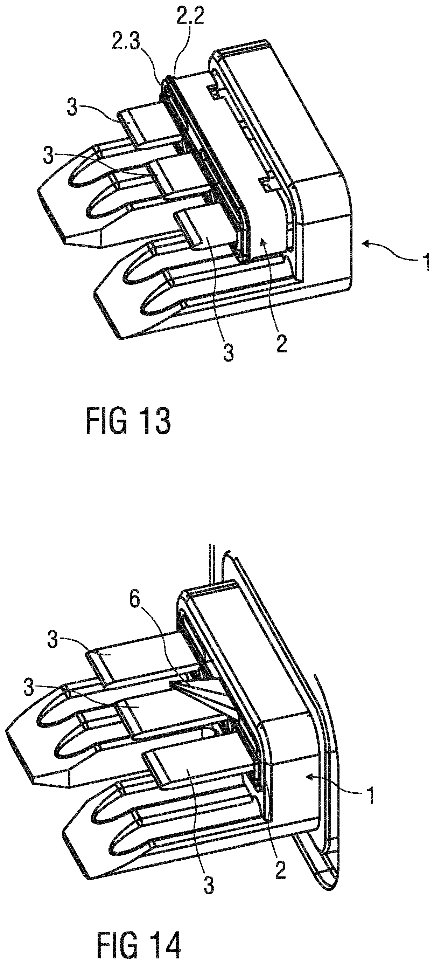

Das Bauteil 1 ist in **Figur 13** im teilweise zusammengesetzten und in **Figur 14** im zusammengesetzten Zustand dargestellt, wobei **Figur 14** einen Ausschnitt des Bauteiles 1 in der zweiten Ausführungsform zeigt.

Mittels des Bauteiles 1 mit dem abgeschlossenen Volumen 4 und den Kontaktelementen 3, die von in das Volumen 4 eingefülltem Dichtmaterial 5 umgeben sind, ist das Risiko eines Eindringens von Umweltmedien, beispielsweise Feuchtigkeit, über die Öffnungen 2.1 in das Bauteil 1 zumindest verringert.

Bei dem Dichtmaterial 5 handelt es sich um ein temperaturbeständiges Dichtmaterial 5, so dass die Abdichtung der Kontaktelemente 3, unabhängig von einem Einsatzort und einer vorherrschenden Temperatur, in welcher sich das Bauteil 1 befindet, im Wesentlichen sichergestellt werden kann.

## Patentansprüche

1. Bauteil (1) mit zumindest einer Öffnung, durch welche ein elektrisches und/oder elektronisches Kontaktelement (3) gegenüber einem Eindringen von Umweltmedien abgedichtet herausgeführt ist, wobei
zumindest in einer Wandung des Bauteiles (1) im Bereich des Kontaktelementes (3) ein abgeschlossenes Volumen (4) ausgebildet ist, in welches ein dauerelastisches Dichtmaterial (5), welches das zumindest eine Kontaktelement (3) zumindest abschnittsweise vollständig umgibt, eingefüllt ist, **dadurch gekennzeichnet, dass** das Deckelelement (2) und/oder die Wandung Leitelemente (2.4) zur Vorgabe einer Fließrichtung des Dichtmaterials (5) beim Einfüllen desselben in das Volumen (4) umfasst.

2. Bauteil (1) nach Anspruch 1,
**dadurch gekennzeichnet, dass** das Bauteil (1) ein Deckelelement (2) mit zumindest einer Öffnung (2.1) umfasst, durch welche das zumindest eine Kontaktelement (3) hindurchgeführt ist, wobei das Volumen (4) zumindest einseitig mittels des Deckelelementes (2) begrenzt ist.

3. Bauteil (1) nach Anspruch 2,
**dadurch gekennzeichnet, dass** das Deckelelement (2) zumindest eine Dichtkante (2.2) zum Verhindern eines Auslaufens des eingefüllten Dichtmaterials (5) aus dem abgeschlossenen Volumen (4) umfasst.

4. Bauteil (1) nach Anspruch 3,
**dadurch gekennzeichnet, dass** die zumindest eine Dichtkante (2.2) an das Deckelelement (2) angespritzt ist.

5. Bauteil (1) nach einem der Ansprüche 2 bis 4,
**dadurch gekennzeichnet, dass** das Deckelelement (2) zumindest einen mit dem Volumen (4) strömungstechnisch verbundenen Überlaufkanal (2.3) umfasst.

6. Bauteil (1) nach einem der Ansprüche 2 bis 5,
**dadurch gekennzeichnet, dass** das Deckelelement (2) zumindest eine Einfüllöffnung zum Einfüllen des Dichtmaterials (5) in das Volumen (4) umfasst.

7. Bauteil (1) nach einem der vorhergehenden Ansprüche,
**dadurch gekennzeichnet, dass** das dauerelastische Dichtmaterial (5) Silikon, Flüssigsilikonkautschuk und/oder Epoxidharze umfasst.

8. Bauteil (1) nach einem der vorhergehenden Ansprüche,
**dadurch gekennzeichnet, dass** das Bauteil (1) aus Kunststoff gebildet ist und das zumindest eine Kontaktelement (3) ein Stanzgitter, ein Draht und/oder eine Litze umfasst.

## Claims

1. Structural part (1) with at least one opening through which an electrical and/or electronic contact element (3) is guided outward in a manner sealed with respect to the penetration of environmental media, wherein
a closed volume (4) is formed at least in a wall of the structural part (1) in the region of the contact element (3), a permanently elastic sealing material (5) which completely surrounds the at least one contact element (3) at least in certain sections being introduced into said volume, **characterized in that** the cover element (2) and/or the wall comprises guiding elements (2.4) for stipulating a direction of flow of the sealing material (5) during the introduction of the latter into the volume (4).

2. Structural part (1) according to Claim 1,
**characterized in that** the structural part (1) comprises a cover element (2) with at least one opening (2.1) through which the at least one contact element (3) is guided, the volume (4) being delimited at least on one side by means of the cover element (2).

3. Structural part (1) according to Claim 2,
**characterized in that** the cover element (2) comprises at least one sealing edge (2.2) for preventing leakage of the introduced sealing material (5) from the closed volume (4).

4. Structural part (1) according to Claim 3,
**characterized in that** the at least one sealing edge (2.2) is molded onto the cover element (2).

5. Structural part (1) according to one of Claims 2 to 4,
**characterized in that** the cover element (2) comprises at least one overflow channel (2.3) connected fluidically to the volume (4).

6. Structural part (1) according to one of Claims 2 to 5,
**characterized in that** the cover element (2) comprises at least one introduction opening for introducing the sealing material (5) into the volume (4).

7. Structural part (1) according to one of the preceding claims,
**characterized in that** the permanently elastic sealing material (5) comprises silicone, liquid silicone rubber and/or epoxy resins.

8. The structural part (1) according to one of the preceding claims,
**characterized in that** the structural part (1) is formed from plastic and the at least one contact element (3) comprises a leadframe, a wire and/or a strand.

## Revendications

1. Composant (1) présentant au moins une ouverture traversée par un élément (3) de contact électrique et/ou électronique tout en étant rendue étanche vis-à-vis de la pénétration de fluides depuis l'environnement,
un volume fermé (4) dans lequel un matériau d'étanchéité (5) à élasticité durable qui entoure complètement au moins certaines parties du ou des éléments de contact (3) étant formé au moins dans une paroi du composant (1) au niveau de l'élément de contact (3),
**caractérisé en ce que**
l'élément de couvercle (2) et/ou la paroi comportent des éléments de guidage (2.4) qui définissent la direction d'écoulement du matériau d'étanchéité (5) lors du remplissage du volume (4) par ce dernier.

2. Composant (1) selon la revendication 1, **caractérisé en ce que** le composant (1) comporte un élément de couvercle (2) doté d'au moins une ouverture (2.1) traversée par le ou les éléments de contact (3), le volume (4) étant délimité au moins d'un côté par l'élément de couvercle (2).

3. Composant (1) selon la revendication 2, **caractérisé en ce que** l'élément de couvercle (2) comporte au moins un bord d'étanchéité (2.2) qui empêche que le matériau d'étanchéité (5) sorte hors du volume formé (4) lorsqu'il y est introduit.

4. Composant (1) selon la revendication 3, **caractérisé en ce que** le ou les bords d'étanchéité (2.2) sont moulés par injection sur l'élément de couvercle (2).

5. Composant (1) selon l'une des revendications 2 à 4,
**caractérisé en ce que** l'élément de couvercle (2) comporte au moins un canal de débordement (2.3) relié à écoulement au volume (4).

6. Composant (1) selon l'une des revendications 2 à 5,
**caractérisé en ce que** l'élément de couvercle (2) comporte au moins une ouverture de remplissage qui permet de remplir le volume (4) par le matériau d'étanchéité (5).

7. Composant (1) selon l'une des revendications précédentes,
**caractérisé en ce que** le matériau d'étanchéité (5) à élasticité permanente comporte du silicone, un caoutchouc liquide au silicone et/ou une résine époxy.

8. Composant (1) selon l'une des revendications en ce que le composant (1) est réalisé en matière synthétique et en ce que le ou les éléments de contact (3) comportent une grille estampée, un fil et/ou une tresse.
